# EUROPÄISCHE PATENTSCHRIFT

(11) **EP 0 973 625 B1**
(45) Veröffentlichungstag und Bekanntmachung des Hinweises auf die Patenterteilung: **24.07.2002**
(21) Anmeldenummer: 98908085.8
(22) Anmeldetag: 11.02.1998
(51) Int. Cl.: B23B 31/103, B23B 27/16

(54) **EINSPANNVORRICHTUNG FÜR WERKZEUGE**
FIXING DEVICE FOR TOOLS
DISPOSITIF DE FIXATION POUR OUTILS

(30) Priorität: 08.04.1997 DE 19714398
(43) Veröffentlichungstag der Anmeldung: 26.01.2000
(73) Patentinhaber: KOMET Präzisionswerkzeuge Robert Breuning GmbH, D-74354 Besigheim (DE)
(72) Erfinder: LEUZE, Peter, D-74399 Walheim (DE)
(74) Vertreter: Wolf, Eckhard, Dr.-Ing.
(86) Internationale Anmeldenummer: EP9800758
(87) Internationale Veröffentlichungsnummer: WO9845075

(56) Entgegenhaltungen:
- DE-B- 1 079 923
- DE-B- 1 106 145
- DE-C- 828 034
- FR-A- 2 399 889
- US-A- 1 458 973

## Beschreibung

Die Erfindung betrifft eine Vorrichtung zum Einspannen eines einen Schaft und ein Schneidenteil aufweisenden, vorzugsweise als Drehstahl ausgebildeten Werkzeugs an einem eine Einstecköffnung zur Aufnahme des Werkzeugschafts aufweisenden Halter, mit einem um eine quer zur Einsteckachse der Einstecköffnung ausgerichtete Drehachse im Halter begrenzt drehbar gelagerten, eine zur Drehachse exzentrische Oberflächenpartie aufweisenden Spannkörper.

Einspannvorrichtungen der eingangs angegebenen Art sollen einen Drehstahl sowohl axial als auch radial und in Umfangsrichtung positionieren und spannen. Der Halter wird seinerseits in eine Aufnahme einer Drehmaschine oder eines Bearbeitungszentrums eingesetzt und dort mittels einer Werkzeugkupplung festgehalten. Es ist eine Einspannvorrichtung bekannt, bei der im Halter eine Spannschraube vorgesehen, die den eine prismatische Gestalt aufweisenden Schaft des Drehstahls in eine komplementäre prismatische Aufnahme eindrückt. Dadurch erhält man eine gute Positionierung in Umfangsrichtung. Die axiale Ausrichtung wird durch einen axialen Anschlag erzielt, gegen den der Drehstahl beim Festspannen von Hand angedrückt wird. Diese Art der Handhabung beim Einspannen wird als relativ umständlich empfunden. Hinzu kommt, daß die Einstecköffnung für den Drehstahl nicht rotationssymmetrisch ausgebildet ist, so daß für links- und rechtsdrehende Werkzeuge unterschiedliche Halter vorgesehen werden müssen. Wegen des für die axiale Positionierung notwendigen Anschlags im Inneren der Einstecköffnungen können nur einschneidige Drehstähle in den Halter eingesteckt und an diesem eingespannt werden.

Weiter ist bei einer Einspannvorrichtung der eingangs angegebenen Art bekannt (US-A 1,458,973), mit Hilfe des Spannkörpers ein Werkzeug mit zylindrischem Schaft am Halter einzuspannen. Bei diesem Spannmechanismus wird als nachteilig empfunden, dass eine exakte Positionierung des Werkzeugs im Halter grundsätzlich nicht möglich ist.

Ausgehend hiervon liegt der Erfindung die Aufgabe zugrunde, eine Einspannvorrichtung der eingangs angegebenen Art zu entwickeln, die eine exakte selbsttätige Positionierung des Werkzeugs im Halter ermöglicht, die eine hohe Steifigkeit gewährleistet und die dennoch beim Einspannvorgang einfach handhabbar ist.

Zur Lösung dieser Aufgabe werden die im Anspruch 1 angegebenen Merkmale vorgeschlagen. Vorteilhafte Ausgestaltungen und Weiterbildungen der Erfindung ergeben sich aus den abhängigen Ansprüchen.

Der Kern der Erfindung besteht im wesentlichen darin, dass in der Schaftoberfläche des Werkzeugs eine quer zur Schaftachse ausgerichtete teilzylindrische Ausnehmung angeordnet ist, und dass Spankörper an seiner zur Drehachse exzentrischen Oberflächenpartie teilzylindrisch ausgebildet ist und mit der teilzylindrischen Oberflächenpartie unter selbsttätiger Einstellung einer bezüglich des Halters in axialer und radialer Richtung sowie in Umfangsrichtung definierten Schneidenposition unter gleichzeitiger Einspannung des Werkzeugsschafts in die teilzylindrische Ausnehmung eindrehbar ist.

Um das Werkzeug in der Offenstellung des Spannkörpers einfach in die Einstecköffnung einführen zu können, ist es von Vorteil, wenn der Spannkörper eine in dessen einer Drehendstellung zur Einstecköffnung weisende und diese für den Durchtritt des Schafts freigebende Scheitelfläche aufweist. Zur Vorzentrierung des Werkzeugs in der im wesentlichen zylindrischen Einstecköffnung ist es ferner von Vorteil, wenn der zylindrische Werkzeugschaft eine zur Scheitelfläche parallel ausrichtbare, zur Schaftachse und zur Ausnehmungsachse parallele Ausrichtfläche aufweist. Wenn dazuhin die Ausnehmungsachse senkrecht zu der am Schneidenteil angreifenden Hauptschnittkraft ausgerichtet ist, können Werkzeuge sowohl für die rechts- als auch für die linksdrehende Bearbeitung in ein und denselben Halter eingesetzt werden.

Die Exzentrizität der teilzylindrischen Oberflächenpartie ist zweckmäßig so bemessen, daß die Oberflächenpartie bei einer Teildrehung des Spannkörpers mit der Zylinderfläche der Ausnehmung in Kontakt tritt und den Schaft des Werkzeugs in der Wandung der Einstecköffnung verspannt. Durch die Querausrichtung der Ausnehmungsachse zur Einsteckachse wird eine Positionierung sowohl in Umfangsrichtung als auch in axialer und radialer Richtung erzielt. Eine besonders hohe Genauigkeit bei der Längenpositionierung wird erreicht, wenn der Spannkörper in seiner Einspannstellung mit der teilzylindrischen Oberflächenpartie so gegen die Sohle der einen geringfügig größeren Durchmesser aufweisenden teilzylindrischen Ausnehmung anliegt, daß die Verbindungsebene zwischen der Drehachse und der Exzenterachse einen Winkel von 3° bis 35°, vorzugsweise 5° bis 15° mit einer zur Einsteckachse senkrechten Radialebene des Werkzeugschafts einschließt.

Vorteilhafterweise ist im Halter eine zur Drehachse konzentrische, teilzylindrische, zur Einstecköffnung hin randoffene Ausnehmung zur Aufnahme des Spannkörpers angeordnet, die sich in der Spannstellung des Schafts mit der teilzylindrischen Ausnehmung des Schafts zu einem Vollzylinder ergänzt. Weiter ist gemäß einer bevorzugten Ausgestaltung der Erfindung am Halter ein axialer Begrenzungsanschlag für das Werkzeug angeordnet, wobei bei gegen den Begrenzungsanschlag anliegendem Werkzeug die Ausnehmung zum Spannkörper hin offen ist und das Werkzeug beim Einspannvorgang entgegen der Einsteckrichtung vom Begrenzungsanschlag unter Einstellung einer definierten axialen Schneidenposition selbsttätig abhebbar ist. Der Begrenzungsanschlag ist dabei zweckmäßig in der Einstecköffnung in Einsteckrichtung hinter dem Spannkörper angeordnet. Er kann beispielsweise als in die Einstecköffnung eingreifender Stift, Keil oder als Nase ausgebildet sein. Eine andere Ausführungsvariante sieht vor, daß die Einstecköffnung als Paßbohrung für den Werkzeugschaft und der Begrenzungsanschlag als die Paßbohrung begrenzende Ringschulter ausgebildet ist.

Eine besonders zuverlässige, während des Bearbeitungsvorgangs unlösbare Einspannung wird mit den erfindungsgemäßen Mitteln dadurch erzielt, daß der Spannkörper an seinen beiden Enden an Lagerstellen des Halters drehbar gelagert und beim Spannvorgang zwischen den Lagerstellen unter Erzeugung eines selbsthemmenden Kraftschlusses und unter Beseitigung eines radialen und axialen Schaftspiels in der Einstecköffnung elastisch verbiegbar ist. Diese Maßnahmen führen zusätzlich zu einer hohen Positioniergenauigkeit, da der Spannkörper in seinem elastisch verbogenen Einspannzustand in der Nähe seiner stirnseitigen Enden stärker gegen die Ausnehmungswand angepreßt ist als in seiner Mitte. Wenn man dazuhin berücksichtigt, daß der Schaft im Einbauzustand gegen die dem Spannkörper gegenüberliegende Öffnungswand angepreßt wird, erhält man in der vom Spannkörper auf den Schaft ausgeübten Einspannrichtung eine Dreipunktanpreßung mit hoher Positioniergenauigkeit.

Die erfindungsgemäßen Maßnahmen ermöglichen es, daß an der dem Schneidenteil gegenüberliegenden Stirnseite des Schafts ein zweiter Schneidenteil angeformt ist, der bei Nichtgebrauch in die entsprechend verlängerte Einstecköffnung im Halter einführbar und dort gegen Zerstörung geschützt ist.

Die Handhabung der erfindungsgemäßen Spannvorrichtung wird erleichtert, wenn der Spannkörper zwischen einer ersten, die Einstecköffnung für den Durchtritt des Schafts freigebenden Endstellung und einer zweiten, eine Verdrehsicherung für den Spannkörper im Halter bildenden Endstellung verdrehbar ist, wobei die Endstellungen durch Anschläge definiert sind. Der Spannkörper kann zu diesem Zweck an seinem einen, stirnseitigen Ende einen in eine Eindrehung des Halters eingreifenden Kopf aufweisen, wobei die Anschläge in einer geschützten Lage innerhalb der Eindrehung durch den Kopf nach außen hin verdeckt angeordnet sind. Weiter kann der Spannkörper an seinen beiden stirnseitigen Enden je einen Schlüsseleingriff aufweisen, damit er von beiden Seiten her betätigt werden kann.

Gemäß einer weiteren vorteilhaften Ausgestaltung der Erfindung wird der Werkzeughalter von einem Kühlmittelkanal axial durchdrungen. Es ist dabei von besonderem Vorteil, wenn der Kühlmittelkanal außerhalb des den Schaft aufnehmenden, vorzugsweise als Paßbohrung ausgebildeten Abschnitts durch die Einstecköffnung und innerhalb des den Schaft aufnehmenden Abschnitts durch mindestens eine zur Einstecköffnung hin randoffene und dort zusätzlich durch den Schaft begrenzte, achsparallele Ausnehmung gebildet ist.

Im folgenden wird die Erfindung anhand eines in der Zeichnung in schematische Weise dargestellten Ausführungsbeispiels näher erläutert. Es zeigen:
- Fig. 1: einen Stahlhalter mit eingesetztem Drehstahl in schaubildlicher Darstellung;
- Fig. 2a und b: eine Seitenansicht und eine Stirnseitenansicht des Stahlhalters nach Fig. 1;
- Fig. 2c: einen Stufenschnitt entlang der Schnittlinie II-II der Fig. 2a;
- Fig. 3: einen Längsschnitt durch den Stahlhalter mit eingesetztem, doppelseitigem Drehstahl;
- Fig. 4a und b: einen vergrößerten Ausschnitt aus Fig. 3 für verschiedene Stellungen des exzentrischen Spannkörpers;
- Fig. 4c: einen Schnitt entlang der Schnittlinie IV-IV der Fig. 3;
- Fig. 5a und b: je einen als Einstechmeißel ausgebildeten Drehstahl für die links- und rechtsdrehende Werkstückbearbeitung;
- Fig. 6: eine vergrößerte, ausschnittsweise Seitenansicht des Drehstahls nach Fig. 5a und b.

Der in der Zeichnung dargestellte Werkzeughalter 10 ist als Stahlhalter für als Drehstähle ausgebildete.Werkzeuge 12 bestimmt. Der Werkzeughalter 10 ist für den Einsatz in eine Drehmaschine bestimmt und weist zu diesem Zweck bei dem gezeigten Ausführungsbeispiel einen zylindrischen Schaft 14 mit mindestens einer Spannfläche 15 für die Einspannung in eine prismatische, zylindrische oder teilzylindrische Aufnahme eines Drehmaschinenrevolvers auf. Der Halter 10 ist ferner mit einer als Einstecköffnung 16 ausgebildeten zylindrischen Bohrung sowie mit einem Spannmechanismus 18 zum Einspannen des Werkzeugs 12 versehen. Das Werkzeug 12 weist zu diesem Zweck einen im wesentlichen zylindrischen Schaft 20 auf, an dessen Stirnseiten je ein nach entgegengesetzten Seiten weisender Schneidenteil 22', 22'' angeformt ist.

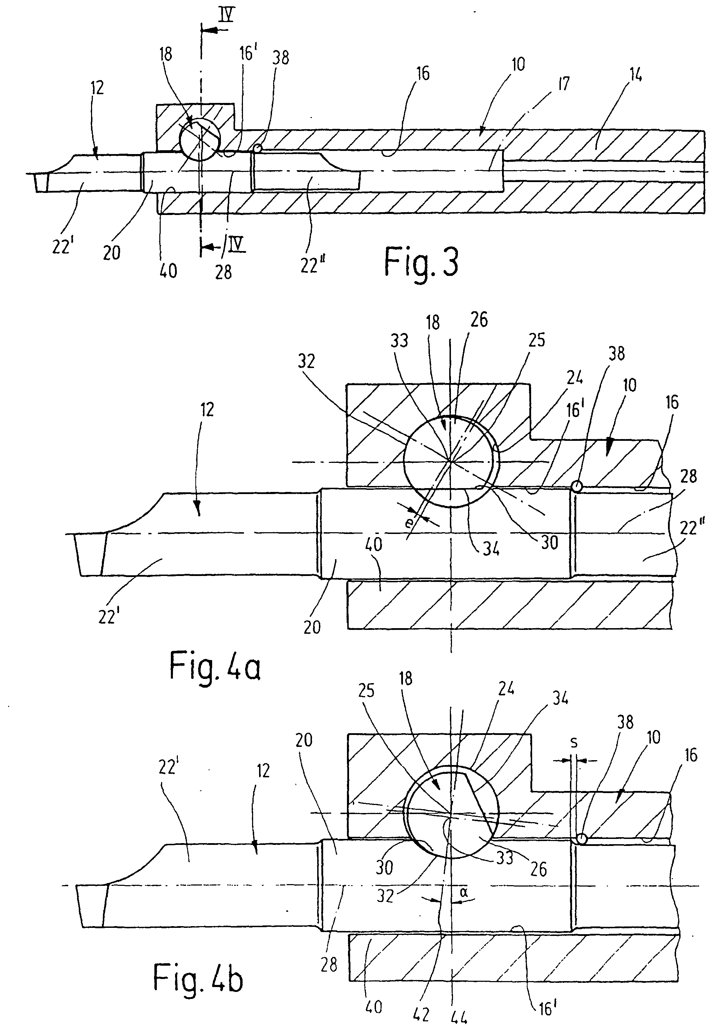

Der Spannmechanismus 18 umfaßt einen in einer mit ihrer Achse 25 quer zur Achse 17 der Einstecköffnung 16 ausgerichteten, zur Einstecköffnung 16 randoffenen Ausnehmung 24 begrenzt drehbar angeordneten Spannkörper 26 und eine in der Oberfläche des Schafts 20 angeordnete, quer zur Schaftachse 28 verlaufende teilzylindrische Ausnehmung 30. Der Spannkörper 26 ist an seinen stirnseitigen Enden in je einer Lagerstelle 31 des Halters 12 um die Achse 25 der Ausnehmung 24 drehbar gelagert und weist eine zur Drehachse 25 exzentrische, teilzylindrische Oberfläche 32 auf. Die Exzentrizität e zwischen der Drehachse 25 und der teilzylindrischen Oberfläche 32 des Spannkörpers 26 ergibt sich aus den Fig. 4a und b. Der Spannkörper 26 ist an seiner Oberfläche zusätzlich mit einer Scheitelfläche 36 versehen, die in der in Fig. 4a gezeigten Endstellung des Spannkörpers 26 zur Einstecköffnung 16 weist und diese für den Durchtritt des Werkzeugschafts 20 freigibt.

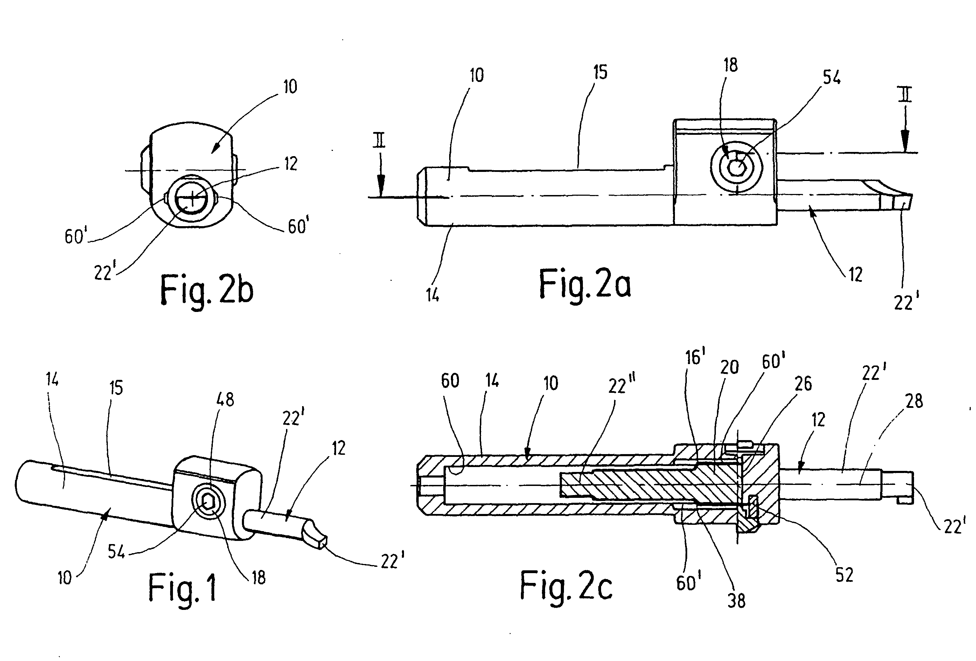

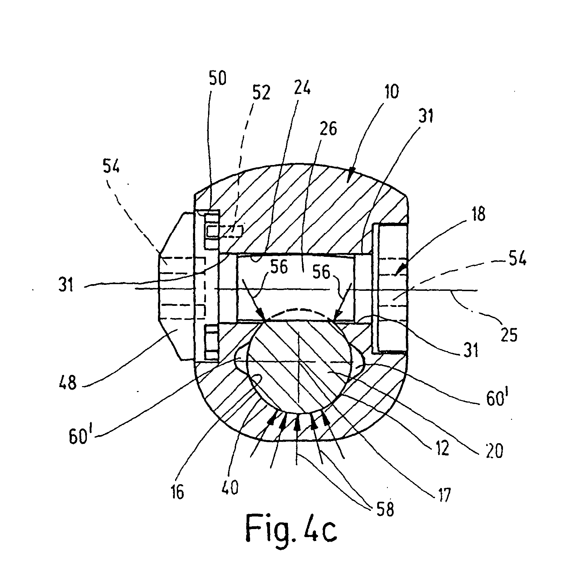

Um eine Vorzentrierung des Werkzeugs 12 beim Einsteckvorgang zu ermöglichen, ist dieses mit einer zur Scheitelfläche 34 parallel ausrichtbaren, zur Schaftachse 28 und zur Ausnehmungsachse 25 parallelen Ausrichtfläche 36 versehen. Weiter ist innerhalb der Einstecköffnung 16 in Einsteckrichtung hinter dem Spannkörper 26 ein Begrenzungsanschlag 38 so angeordnet, daß er zwar den Durchtritt für den Schneidenteil 22'' beim Einsteckvorgang freigibt aber den Einsteckweg des Schafts 20 so begrenzt, daß die randoffene Ausnehmung 30 in den Wirkbereich des Spannkörpers 26 gelangt. Bei dem Ausführungsbeispiel nach Fig. 3 und 4 ist der Begrenzungsanschlag 38 als in die Einstecköffnung 16 am Ende des den Schaft 20 aufnehmenden Abschnitts 16' eingreifender Stift angedeutet, während bei dem Ausführungsbeispiel nach Fig. 2c der den Schaft 20 aufnehmende Abschnitt 16' der Einstecköffnung 16 als Paßbohrung für den Werkzeugschaft und der Begrenzungsanschlag 38 als die Paßbohrung begrenzende Ringschulter ausgebildet ist.

Der Spannkörper 26 weist einen stirnseitig angeordneten Kopf 48 auf, mit dem er in eine Eindrehung 50 des Halters eingreift. In der Eindrehung 50 befindet sich ferner in einem durch den Kopf 48 nach außen hin verdeckten Ringraum ein Anschlagbolzen 52, der den Drehwinkel des Spannkörpers 26 auf etwa 160° begrenzt, Zum Drehen ist im Kopf 48 ein beispielsweise als Mehrkantöffnung ausgebildeter Schlüsseleingriff 54 vorgesehen. Wird der Spannkörper 26 um seine Drehachse 25 von der Stellung nach Fig. 4a in die in Fig. 4b gezeigte Stellung gedreht, so dringt seine exzentrische, teilzylindrische Oberfläche 32 in die teilzylindrische Ausnehmung 30 des Schafts 20 ein und verspannt in der in Fig. 4b gezeigten Endstellung den Schaft 20 mit der Bohrungswand 40 der Einstecköffnung 16. Gleichzeitig wird der Schaft 20 über die miteinander verspannten Zylinderflächen des Spannkörpers 26 und der Ausnehmung 30 vom Begrenzungsanschlag 38 um das Maß s abgehoben und in axialer Richtung selbsttätig positioniert. Zusätzlich ergibt sich beim Spannvorgang eine exakte Positionierung in radialer Richtung und in Umfangsrichtung des Werkzeugs 12 gegenüber dem Halter 10. Da der an seinen beiden Enden an den Lagerstellen 31 des Halters 10 gelagerte Spannkörper zwischen den Lagerstellen elastisch verbiegbar ist, ergibt sich beim Spannvorgang ein selbsthemmender Kraftschluß innerhalb des Spannmechanismus 18, der sich auch bei einem vibrierenden Bearbeitungsvorgang nicht löst. Die Durchbiegung des Spannkörpers führt zu einer bevorzugten Anpressung an den Enden der Ausnehmungssohle in Richtung der Pfeile 56, so daß sich in Verbindung mit den Reaktionskräften gemäß den Pfeilen 58 eine Dreipunktanlage mit hoher Positioniergenauigkeit des Werkzeugs 12 im Halter 10 ergibt. Eine weitere Verbesserung in dieser Hinsicht wird erzielt, wenn die Exzentrizität e so bemessen wird, daß der Spannkörper in seiner in Fig. 4a gezeigten Einspannstellung mit seiner teilzylindrischen Oberflächenpartie 32 so gegen die Sohle der teilzylindrischen Ausnehmung 30 anliegt, daß die Verbindungsebene 42 zwischen der Drehachse 25 und der Exzenterachse 33 einen Winkel α von 5° bis 15° mit einer zur Schaftachse 28 senkrechten Ebene 44 einschließt (Fig. 4b).

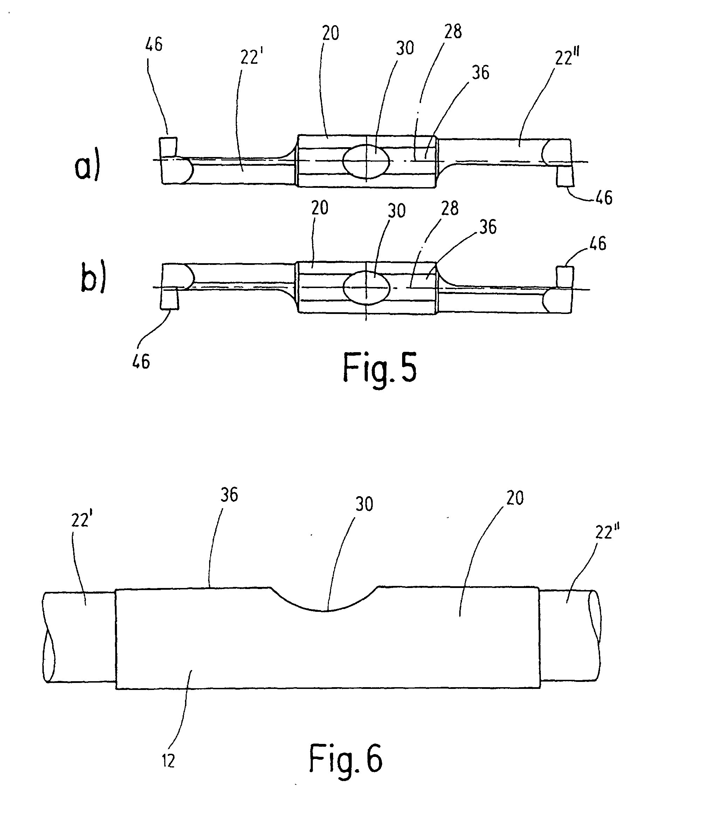

Da bei dem in Fig. 5a und b gezeigten Ausführungsbeispiel die randoffene Ausnehmung 30 mit ihrer Achse 25 senkrecht zu den an den Schneiden 46 der Schneidenteile 22', 22'' angreifenden Hauptschnittkräften ausgerichtet ist, können in den Halter 10 sowohl Werkzeuge für die linksdrehende Bearbeitung (Fig. 5a) als auch solche für die rechtsdrehende Bearbeitung (Fig. 5b) ohne Einbuße an Positiniergenauigkeit und Steifigkeit eingesetzt werden.

Im Werkzeughalter ist ein axial durchgehender Kühlmittelkanal 60 angeordnet, der im rückwärtigen Bereich des Halters 10 durch die Einstecköffnung 16 und innerhalb des den Schaft 20 aufnehmenden Abschnitts 16' durch zwei zur Einstecköffnung 16 hin randoffene und dort durch den Schaft 20 begrenzte, achsparallele Ausnehmungen 60' gebildet ist.

Zusammenfassend ist folgendes festzustellen: Die Erfindung bezieht sich auf eine Vorrichtung zum Einspannen eines vorzugsweise als Drehstahl ausgebildeten Werkzeugs 12 an einem Werkzeughalter 10, wobei das Werkzeug einen Schaft 20 und mindestens ein Schneidenteil 22', 22'' und der Halter 10 eine Einstecköffnung 16 zur Aufnahme des Werkzeugsschafts 20 aufweist. Um eine einfach handhabbare und dennoch steife Spannverbindung zwischen dem Halter 10 und dem Werkzeug 12 mit hoher Positioniergenauigkeit herstellen zu können, wird gemäß der Erfindung vorgeschlagen, daß die Spannvorrichtung 18 einen Spannkörper 26 aufweist, der um eine quer zur Einsteckachse 17 der Einstecköffnung 16 ausgerichtete Drehachse 25 im Halter begrenzt drehbar gelagert ist und eine teilzylindrische, zur Drehachse 25 exzentrische Oberflächenpartie 32 aufweist, und daß in der Schaftoberfläche eine quer zur Schaftachse 28 ausgerichtete, randoffene teilzylindrische Ausnehmung 30 vorgesehen ist, in die der Spannkörper 26 mit seiner teilzylindrischen Oberflächenpartie unter Einspannen des Werkzeugschafts 14 eindrehbar ist.

## Patentansprüche

1. Vorrichtung zum Einspannen eines einen Schaft (20) und ein Schneidenteil (22') aufweisenden, vorzugsweise als Drehstahl ausgebildeten Werkzeugs (12) an einem eine Einstecköffnung (16) zur Aufnahme des Werkzeugschafts (20) aufweisenden Halter (10), mit einem um eine quer zur Einsteckachse (17) der Einstecköffnung (16) ausgerichtete Drehachse (25) im Halter (10) begrenzt drehbar gelagerten, eine zur Drehachse (25) exzentrische Oberflächenpartie (32) aufweisenden Spannkörper (26), **dadurch gekennzeichnet, daß** in der Schaftoberfläche des Werkzeugs (12) eine quer zur Schaftachse (28) ausgerichtete teilzylindrische Ausnehmung (24) angeordnet ist und daß der Spannkörper (26) an seiner zur Drehachse exzentrischen Oberflächenpartie (32) teilzylindrisch ausgebildet ist und mit der teilzylindrischen Oberflächenpartie (32) unter selbsttätiger Einstellung einer bezüglich des Halters (10) in axialer und radialer Richtung sowie in Umfangsrichtung definierten Schneidenposition unter gleichzeitiger Einspannung des Werkzeugschafts in die teilzylindrische Ausnehmung (24) eindrehbar ist.

2. Vorrichtung nach Anspruch 1, **dadurch gekennzeichnet, daß** die Einstecköffnung (16) des Halters (10) als Zylinderbohrung ausgebildet ist, und daß das Werkzeug (12) einen im wesentlichen zylindrischen Schaft (20) aufweist.

3. Vorrichtung nach Anspruch 1 oder 2, **dadurch gekennzeichnet, daß** der Spannkörper (26) eine Scheitelfläche (34) aufweist, die in der einen Drehendstellung des Spannkörpers (26) zur Einstecköffnung (16) weist und diese für den Durchtritt des Schafts (20) freigibt.

4. Vorrichtung nach Anspruch 3, **dadurch gekennzeichnet, daß** der zylindrische Werkzeugschaft (20) eine zur Scheitelfläche des Spannkörpers (26) in dessen einer Drehendstellung parallel ausrichtbare, zur Schaftachse (28) und zur Achse der teilzylindrischen Ausnehmung parallele Ausrichtfläche (36) aufweist.

5. Vorrichtung nach einem der Ansprüche 1 bis 4, **dadurch gekennzeichnet, daß** der Spannkörper (26) in seiner Einspannstellung mit seiner teilzylindrischen Oberflächenpartie (32) so gegen die Sohle der Ausnehmung (30) anliegt, daß die Verbindungsebene (42) zwischen der Drehachse (25) und der Exzenterachse (33) einen Winkel (α) von 3° bis 35°, vorzugsweise 5° bis 15° mit einer zur Schaftachse (28) senkrechten Ebene (44) einschließt.

6. Vorrichtung nach einem der Ansprüche 1 bis 5, **dadurch gekennzeichnet, daß** im Halter (10) eine zur Drehachse (25) konzentrische, zur Einstecköffnung (16) hin randoffene Ausnehmung (24) zur Aufnahme des Spannkörpers (26) angeordnet ist, die sich in der Spannstellung des Schafts (20) mit der teilzylindrischen Ausnehmung (30) im Bereich der jeweiligen Randöffnungen zu einem Vollzylinder ergänzt.

7. Vorrichtung nach einem der Ansprüche 1 bis 6, **dadurch gekennzeichnet, daß** am Halter (10) ein Begrenzungsanschlag (38) für das Werkzeug (12) angeordnet ist, daß bei gegen den Begrenzungsanschlag (38) anliegendem Werkzeug (12) die Ausnehmung (30) des Schafts (20) zum Spannkörper (26) hin offen ist, und daß das Werkzeug (12) beim Einspannvorgang entgegen der Einsteckrichtung vom Begrenzungsanschlag (38) unter Einstellung einer definierten axialen Schneidenposition selbsttätig abhebbar ist.

8. Vorrichtung nach Anspruch 7, **dadurch gekennzeichnet, daß** der Begrenzungsanschlag (38) in der Einstecköffnung (16) in Einsteckrichtung hinter dem Spannkörper (26) angeordnet ist.

9. Vorrichtung nach einem der Ansprüche 1 bis 8, **dadurch gekennzeichnet, daß** der Spannkörper (26) mit seinen beiden stirnseitigen Enden an Lagerstellen (31) des Halters (10) drehbar gelagert und beim Spannvorgang unter Erzeugung eines selbsthemmenden Kraftschlusses im Bereich zwischen den Lagerstellen (31) und unter Beseitigung eines radialen und axialen Schaftspiels in der Einstecköffnung elastisch verbiegbar ist.

10. Vorrichtung nach Anspruch 9, **dadurch gekennzeichnet, daß** der Spannkörper (26) in seinem elastisch verbogenen Einspannzustand in der Nähe seiner stirnseitigen Enden stärker gegen die Ausnehmungswand des Werkzeugschafts (20) angepreßt ist als in seiner Mitte.

11. Vorrichtung nach Anspruch 10, **dadurch gekennzeichnet, daß** der Spannkörper (26) im elastisch verbogenen Einbauzustand in seinem mittleren Bereich von der Ausnehmungswand des Schafts (20) abgehoben ist und vorzugsweise gegen die gegenüberliegende Begrenzungswand des Halters (10) anliegt.

12. Vorrichtung nach einem der Ansprüche 1 bis 11, **dadurch gekennzeichnet; daß** an der dem Schneidenteil (22') abgewandten Stirnseite des Schaftes (20) ein zweiter Schneidenteil (22'') angeformt ist, der in die entsprechend verlängerte Einstecköffnung (16) einführbar ist.

13. Vorrichtung nach einem der Ansprüche 1 bis 12, **dadurch gekennzeichnet, daß** die Achse der am Schaft (20) angeordneten randoffenen Ausnehmung (30) senkrecht zu der am Schneidenteil (22',22'') angreifenden Hauptschnittkraft ausgerichtet ist.

14. Vorrichtung nach einem der Ansprüche 1 bis 13, **dadurch gekennzeichnet, daß** der Spannkörper (26) zwischen einer ersten, die Einstecköffnung (16) für den Durchtritt des Schafts (20) freigebenden Endstellung und einer zweiten, eine Verdrehsicherung für den Spannkörper (26) bildenden Endstellung verdrehbar ist, wobei die Endstellungen durch Anschläge (52) definiert sind.

15. Vorrichtung nach Anspruch 14, **dadurch gekennzeichnet, daß** der Spannkörper (26) an seinem einen, stirnseitigen Ende einen in eine Stufenbohrung oder Eindrehung (50) des Halters (10) eingreifenden Kopf (48) aufweist, wobei die Anschläge (52) innerhalb der Stufenbohrung oder Eindrehung (50) durch den Kopf (48) nach außen hin verdeckt angeordnet sind.

16. Vorrichtung nach einem der Ansprüche 1 bis 15, **dadurch gekennzeichnet, daß** der Spannkörper (26) an seinen beiden stirnseitigen Enden je einen Schlüsseleingriff (54) aufweist.

17. Vorrichtung nach einem der Ansprüche 1 bis 16, **gekennzeichnet durch** einen den Halter axial durchsetzenden Kühlmittelkanal (60,60').

18. Vorrichtung nach Anspruch 17, **dadurch gekennzeichnet, daß** der Kühlmittelkanal (60,60') außerhalb des den Schaft (20) aufnehmenden Abschnitts durch die Einstecköffnung (16) und innerhalb des den Schaft (20) aufnehmenden Abschnitts (16') durch mindestens eine zur Einstecköffnung hin randoffene und dort durch den Schaft (20) begrenzte achsparallele Ausnehmung (60') gebildet ist.

19. Vorrichtung nach einem der Ansprüche 1 bis 18, **dadurch gekennzeichnet, daß** die Einstecköffnung (16) zumindest in dem den Schaft aufnehmenden Abschnitt (16') als Paßbohrung für den Werkzeugschaft (20) und der Begrenzungsanschlag (38) als die Paßbohrung begrenzende Ringschulter ausgebildet ist.

20. Vorrichtung nach einem der Ansprüche 1 bis 19 wobei das Werkzeug (12) einen vorzugsweise zylindrischen Schaft (20) und einen stirnseitig am Schaft angeformten Schneidenteil (22) aufweist, **dadurch gekennzeichnet, daß** in der Schaftoberfläche des Werkzeugs (12) eine quer zur Schaftachse (28) ausgerichtete teilzylindrische Ausnehmung (30) angeordnet ist, die für den Eingriff des Spannorgans (26) bestimmt ist.

21. Vorrichtung nach Anspruch 20, **dadurch gekennzeichnet, daß** der Schaft (20) eine die Ausnehmung (30) randseitig begrenzende, zur Schaftachse (28) und zur Ausnehmungsachse parallele, ebene Ausrichtfläche (36) aufweist.

22. Vorrichtung nach Anspruch 20 oder 21, **dadurch gekennzeichnet, daß** die Ausnehmungsachse senkrecht zu der am Schneidenteil (22',22'') angreifenden Hauptschnittkraft ausgerichtet ist.

23. Vorrichtung nach einem der Ansprüche 20 bis 22, **dadurch gekennzeichnet, daß** an der dem Schneidenteil (22') abgewandten Stirnseite des Schafts (20) ein zweiter Schneidenteil (22'') angeformt ist.

## Claims

1. Device for fixing a tool (12), having a shank (20) and a cutting part (22') and preferably designed as a turning tool, to a holder (10) having an insertion opening (16) for accommodating the tool shank (20), said device having a clamping element (26) which is mounted in such a way that it can rotate to a restricted extent about an axis of rotation (25) in the holder (10) aligned transversely to the axis of insertion (17) of the insertion opening (16) and has a surface portion (32) which is eccentric in relation to the axis of rotation (25), **characterized in that** a partially cylindrical recess (30) aligned transversely to the shank axis (28) is arranged in the surface of the tool (12), and that the clamping element (26) is of a partially cylindrical design at its surface portion (32) which is eccentric in relation to the axis of rotation and can be screwed by the partially cylindrical surface portion (32) into the partially cylindrical recess (30), thereby automatically setting a position of the cutting edge that is defined with respect to the holder (10) in the axial and radial directions as well as in the circumferential direction and at the same time fixing the tool shank.

2. Device as claimed in claim 1, **characterized in that** the insertion opening (16) of the holder (10) is designed as a cylindrical bore, and that the tool (12) has an essentially cylindrical shank (20).

3. Device as claimed in claim 1 or 2, **characterized in that** the clamping element (26) has a top surface (34) which, in the one turning end position of the clamping element (26), faces the insertion opening (16) and exposes the latter for the passing through of the shank (20).

4. Device as claimed in claim 3, **characterized in that** the cylindrical tool shank (20) has an aligning surface (36) which can be aligned parallel to the top surface of the clamping element (26) in the one turning end position of the latter and is parallel to the axis of the shank (28) and the axis of the partially cylindrical recess.

5. Device as claimed in one of claims 1 to 4, **characterized in that**, in its fixing position, the clamping element (26) bears with its partially cylindrical surface portion (32) against the bottom of the recess (30) in such a way that the joining plane (42) between the axis of rotation (25) and the axis of eccentricity (33) forms an angle (α) of 3° to 35°, preferably 5° to 15°, with a plane (44) that is perpendicular to the axis of the shank (28).

6. Device as claimed in one of claims 1 to 5, **characterized in that** a recess (24) for accommodating the clamping element (26) is arranged in the holder (10), which recess is concentric with respect to the axis of rotation (25), open-edged toward the insertion opening (16) and, in the clamping position of the shank (20), is complemented by the partially cylindrical recess (30) in the region of the respective edge openings to form a full cylinder.

7. Device as claimed in one of claims 1 to 6, **characterized in that** a limiting stop (38) for the tool (12) is arranged on the holder (10), that the recess (30) of the shank (20) is open toward the clamping element (26) when the tool (12) is bearing against the limiting stop (38), and that it is possible during the fixing operation for the tool (12) to lift automatically off the limiting stop (38) counter to the direction of insertion, thereby setting a defined axial position of the cutting edge.

8. Device as claimed in claim 7, **characterized in that** the limiting stop (38) is arranged in the insertion opening (16) such that, in the direction of insertion, it is behind the clamping element (26).

9. Device as claimed in one of claims 1 to 8, **characterized in that** the clamping element (26) is mounted in such a way that it can rotate at both its ends at bearing locations (31) of the holder (10) and is able during the clamping operation to bend flexibly between the bearing locations (31), thereby producing a self-locking frictional connection in the region between the bearing locations (31) and eliminating radial and axial shank backlash in the insertion opening.

10. Device as claimed in claim 9, **characterized in that** the clamping element (26) in its flexibly bent fixing state is pressed to a greater extent against the wall of the recess of the tool shank (20) near its extreme ends than in its middle.

11. Device as claimed in claim 10, **characterized in that** the clamping element (26) in the flexibly bent fixing state is lifted in its middle region off the wall of the recess of the shank (20) and preferably bears against the oppositely lying bounding wall of the holder (10).

12. Device as claimed in one of claims 1 to 11, **characterized in that** there is formed on the end face of the shank (20) remote from the cutting part (22') a second cutting part (22"), which can be introduced into the correspondingly lengthened insertion opening (16).

13. Device as claimed in one of claims 1 to 12, **characterized in that** the axis of the open-edged recess (30) arranged on the shank (20) is aligned perpendicularly to the main cutting force acting at the cutting part (22', 22").

14. Device as claimed in one of claims 1 to 13, **characterized in that** the clamping element (26) can be turned between a first end position, exposing the insertion opening (16) for the passing through of the shank (20), and a second end position, forming a securement against turning for the clamping element (26), the end positions being defined by stops (52).

15. Device as claimed in claim 14, **characterized in that** the clamping element (26) has on its one extreme end a head (48) engaging in a stepped bore or turned relief (50) of the holder (10), the stops (52) being arranged such that they are outwardly covered by the head (48) within the stepped bore or turned relief (50).

16. Device as claimed in one of claims 1 to 15, **characterized in that** the clamping element (26) has at each of both its extreme ends a wrench socket (54).

17. Device as claimed in one of claims 1 to 16, which comprises a coolant duct (60, 60') passing axially through the holder.

18. Device as claimed in claim 17, **characterized in that**, outside the portion accommodating the shank (20), the coolant duct (60, 60') is formed by the insertion opening (16) and, within the portion (16') accommodating the shank (20), it is formed by at least one axially parallel recess (60') which is open-edged toward the insertion opening and bounded there by the shank (20).

19. Device as claimed in one of claims 1 to 18, **characterized in that** the insertion opening (16) is designed, at least in the portion (16') accommodating the shank, as a locating hole for the tool shank (20) and the limiting stop (38) is designed as an annular shoulder bounding the locating hole.

20. Device as claimed in one of the claims 1 to 19, said tool (12) having a preferably cylindrical shank (20) and a cutting part (22') formed onto the shank at the end face, **characterized in that** in the shank surface of the tool (12) there is arranged a partially cylindrical recess (30) which is aligned transversely to the shank axis (28) and is intended for the engagement of a clamping element (26) of the clamping device (18).

21. Device as claimed in claim 20, **characterized in that** the shank (20) has a planar aligning surface (36) which bounds the recess (30) at the edges and is parallel to the axis of the shank (28) and the axis of the recess.

22. Device as claimed in claim 20 or 21, **characterized in that** the axis of the recess is aligned perpendicularly to the main cutting force acting at the cutting part (22', 22").

23. Device as claimed in one of claims 20 to 22, **characterized in that** there is formed on the end face of the shank (20) remote from the cutting part (22') a second cutting part (22").

## Revendications

1. Dispositif de fixation d'un outil (12), formé par une tige (20) et une partie active (22') et conçu de préférence sous forme d'outil de tournage, sur un porte-outil (10) muni d'un orifice d'emboîtement (16), dans lequel s'emboîte la tige de l'outil (20), comprenant un corps de serrage (26), qui est logé dans le porte-outil (10) de manière à pouvoir effectuer une rotation limitée autour d'un axe de rotation (25) orienté transversalement à l'axe d'emboîtement (17) de l'orifice d'emboîtement (16) et qui est muni d'une partie superficielle (32) excentrée par rapport à l'axe de rotation (25), **caractérisé en ce qu'**une cavité (24) partiellement cylindrique est réalisée dans la surface de la tige de l'outil (12) et est orientée transversalement à l'axe de la tige (28), et **en ce que** le corps de serrage (26) est partiellement cylindrique sur la partie superficielle (32) excentrée par rapport à l'axe de rotation et peut être introduit par rotation avec sa partie superficielle (32) partiellement cylindrique dans la cavité (24) partiellement cylindrique avec un ajustement automatique de la position des parties actives ou de coupe par rapport au porte-outil (10) dans le sens axial et radial, ainsi que dans le sens périphérique, tout en bloquant simultanément la tige de l'outil.

2. Dispositif selon la revendication 1, **caractérisé en ce que** l'orifice d'emboîtement (16) du porte-outil (10) est conçu sous forme de forure cylindrique et **en ce que** l'outil (12) comporte une tige (20) sensiblement cylindrique.

3. Dispositif selon la revendication 1 ou 2, **caractérisé en ce que** le corps de serrage (26) comporte une surface en sommetou faîtière (34) qui, dans l'une des positions finales de rotation du corps de serrage (26), est orientée vers l'orifice d'emboîtement (16) et libère celui-ci pour le passage de la tige (20).

4. Dispositif selon la revendication 3, **caractérisé en ce que** la tige (20) cylindrique est munie.d'une face d'ajustage (36) parallèle à l'axe de la tige (28) et à l'axe de la cavité partiellement cylindrique et pouvant être orientée parallèlement à la surface en sommet du corps de serrage (26).

5. Dispositif selon l'une quelconque des revendications 1 à 4, **caractérisé en ce que** le corps de serrage (26), dans sa position de blocage, vient en appui avec sa partie superficielle (32) partiellement cylindrique contre le fond de la cavité (30), de telle sorte que le plan d'assemblage (42) entre l'axe de rotation-(25) et l'axe excentré (33) forme avec un plan (44) perpendiculaire à l'axe de la tige (28) un angle (α) de 3° à 35°, de préférence de 5° à 15°.

6. Dispositif selon l'une quelconque des revendications 1 à 5, **caractérisé en ce qu'**une cavité (24) ouverte sur le bord orienté vers l'orifice d'emboîtement (16) et concentrique à l'axe de rotation (25) est réalisée dans le porte-outil (10) pour recevoir le corps de serrage (26), laquelle cavité complète la cavité (30) partiellement cylindrique pour former un cylindre complet dans la zone des bords ouverts de chaque cavité.

7. Dispositif selon l'une quelconque des revendications 1 à 6, **caractérisé en ce qu'**une butée de limitation (38) pour l'outil (12) est réalisée sur le porte-outil (10), **en ce que** la cavité (30) de la tige (20) est ouverte vers le corps de serrage (26) lorsque l'outil (12) est en appui contre la butée de limitation (38) et **en ce que** l'outil (12) se détache automatiquement de la butée de limitation (38) dans le sens opposé au sens d'introduction en ajustant sa partie active dans une position axiale définie.

8. Dispositif selon la revendication 7, **caractérisé en ce que** la butée de limitation (38) est réalisée dans l'orifice d'emboîtement (16) en aval du corps de serrage (26) par référence au sens d'introduction.

9. Dispositif selon l'une quelconque des revendications 1 à 8, **caractérisé en ce que** le corps de serrage (26) est logé avec ses deux extrémités frontales dans des logements (31) du porte-outil (10) de manière à pouvoir tourner et peut se déformer élastiquement pendant le processus de serrage en formant un assemblage par friction autobloquant dans la zone entre les logements (31) et en supprimant le jeu radial et axial de la tige dans l'orifice d'emboîtement.

10. Dispositif selon la revendication 9, **caractérisé en ce que** le corps de serrage (26), à l'état de serrage avec déformation élastique, est serré contre la paroi de la cavité avec une plus grande force à proximité de ses extrémités frontales que dans sa partie centrale.

11. Dispositif selon la revendication 10, **caractérisé en ce que** le corps de serrage (26), à l'état de serrage avec déformation élastique, se détache dans sa partie centrale de la paroi de la cavité réalisée dans la tige (20) et, de préférence, est en appui contre la paroi de délimitation opposée du porte-outil (10).

12. Dispositif selon l'une quelconque des revendications 1 à 11, **caractérisé en ce que** contre la face frontale de la tige (20) opposée à la partie active (22') est formée une deuxième partie active ou de coupe (22''), qui peut être insérée dans l'orifice d'emboîtement (16) rallongé de manière correspondante.

13. Dispositif selon l'une quelconque des revendications 1 à 12, **caractérisé en ce que** l'axe de la cavité (30), ouverte sur le bord et réalisée sur la tige (20), est orientée perpendiculairement à l'effort de coupe principal appliqué sur la partie active (22', 22'').

14. Dispositif selon l'une quelconque des revendications 1 à 13, **caractérisé en ce que** le corps de serrage (26) peut tourner entre une première position finale, libérant l'orifice d'emboîtement (16) pour le passage de la tige (20), et une deuxième position finale, dans laquelle le corps de serrage (26) ne peut pas tourner, les positions finales étant définies par des butées (52).

15. Dispositif selon la revendication 14, **caractérisé en ce que** le corps de serrage (26) comporte sur l'une de ses extrémités frontales une tête (48) qui s'engage dans une forure étagée ou une gorge (50) du porte-outil (10), les butées (52) étant disposées à l'intérieur de la forure étagée ou de la gorge (50) en étant protégées par rapport à l'extérieur par la tête (48).

16. Dispositif selon l'une quelconque des revendications 1 à 15, **caractérisé en ce que** le corps de serrage (26) comporte un engagement pour clé (54) réalisé sur chacune de ses deux extrémités frontales.

17. Dispositif selon l'une quelconque des revendications 1 à 16, **caractérisé par** un canal pour fluide de refroidissement (60, 60') traversant le porte-outil dans le sens axial.

18. Dispositif selon la revendication 17, **caractérisé en ce que** le canal pour fluide de refroidissement (60, 60') est formé par l'orifice d'emboîtement (16), dans la zone à l'extérieur du tronçon recevant la tige (20), et par au moins une cavité (60') parallèle à l'axe avec un bord ouvert orienté vers l'orifice d'emboîtement et délimitée à cet endroit par la tige (20), dans la zone à l'intérieur du tronçon recevant la tige (20).

19. Dispositif selon l'une quelconque des revendications 1 à 18, **caractérisé en ce que** l'orifice d'emboîtement (16), au moins dans le tronçon (16') recevant la tige, est conçu sous forme de forure ou d'alésage calibré(e) pour la tige (20) de l'outil et la butée de limitation (38) est conçue sous forme d'épaulement annulaire délimitant la forure calibrée.

20. Dispositif selon l'une quelconque des revendications 1 à 19, dans lequel l'outil (12) comporte de préférence une tige (20) cylindrique et une partie active (22) formée sur une face frontale de la tige, **caractérisé en ce que** sur la surface de la tige de l'outil (12) est réalisée une cavité (30) partiellement cylindrique orientée transversalement à l'axe de la tige (28), dans laquelle cavité s'engage le corps de serrage (26).

21. Dispositif selon la revendication 20, **caractérisé en ce que** la tige (20) est munie d'une face d'ajustage (36) plane délimitant au bord la cavité (30), parallèle à l'axe de la tige (20) et à l'axe de la cavité.

22. Dispositif selon la revendication 20 ou 21, **caractérisé en ce que** l'axe de la cavité est perpendiculaire à l'effort de coupe principal appliqué sur la partie active (22', 22'').

23. Dispositif selon l'une quelconque des revendications 20 à 22, **caractérisé en ce qu'**une deuxième partie active (22'') est formée contre la face frontale de la tige (20) opposée à la partie active (22').
